# EUROPEAN PATENT APPLICATION

(11) **EP 2 495 709 A2**
(43) Date of publication of application: **05.09.2012**
(21) Application number: 12157389.3
(22) Date of filing: 28.02.2012
(51) Int. Cl.: G08B 5/36, G02B 5/02, G02F 1/01, G09F 13/00

(54) **Light-emitting bellbox**

(30) Priority: 01.03.2011 GB 201103461
(71) Applicant: Pyronix Limited, Rotherham S66 8QY (GB)
(72) Inventor: Herrera, Juan, Rotherham, S60 2TR (GB)
(74) Representative: Jennings, Vincent Louis

(57) **Abstract**

Embodiments of the present invention provide a bellbox comprising a housing having a front face; the bellbox further comprising a light source and a light diffuser adapted to diffuse light from the light source to produce thereby substantially uniform light emanating from the front face.

## Description

### Field of the invention

Embodiments of the present invention relate to a bellbox.

### Background to the invention

Alarms systems comprise one or more internal detectors for sensing the presence of an intruder and one or more sounders for raising an alarm following detecting such an intruder. One of the sounders is usually housed within a bellbox that is mounted on an external face of the building to be protected.

### Summary of the invention

Embodiments of the present invention provide a bellbox comprising a housing having a front face; the bellbox further comprising a light source and a light diffuser adapted to diffuse light from the light source to thereby produce substantially uniform light radiating from the front face.

### Brief Description of the drawings

Embodiments of the present invention will now be described by way of example only with reference to the accompanying drawings in which
Figure 1 is a first perspective view of a bellbox;
Figure 2 is a second perspective view of the bellbox;
Figure 3 is a perspective view of the bellbox front cover and light diffuser;
Figure 4 is an exploded view of the front cover and light diffuser; and
Figure 5 shows schematically a control system for a bellbox according to an embodiment.

### Description of embodiments of the invention

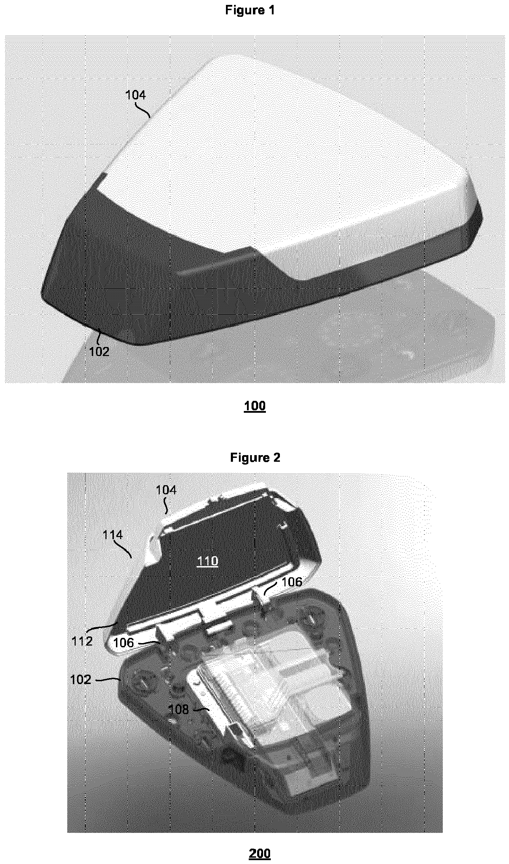

Figure 1 shows a first perspective view of a bellbox 100 comprising a back portion 102 and a complementary front cover 104; together forming an enclosed housing.

Figure 2 shows a second perspective view 200 of the bellbox 100 with the front cover 104 in an open position. The front cover 104 is connected to the back portion 102 via a pair of hinges 106.

Optionally, the housing bears a circuit board 108 having electronics for producing an output in response to detecting an intruder. Typically, the output comprises at least one or more of an audible output and a visual output, taken jointly and severally.

A first embodiment of the invention relates to a bellbox comprising a light diffuser 110. The diffuser 110 is arranged to illuminate the rear face 112 of the front cover 104 using light from a light source (not shown). The illumination is substantially uniform and produces substantially uniform light emanating from an outward or front face of the front cover. 104.

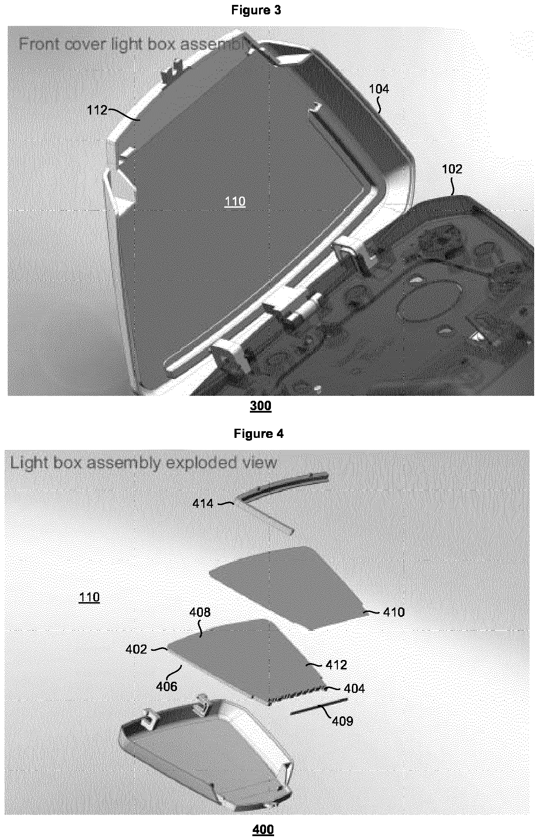

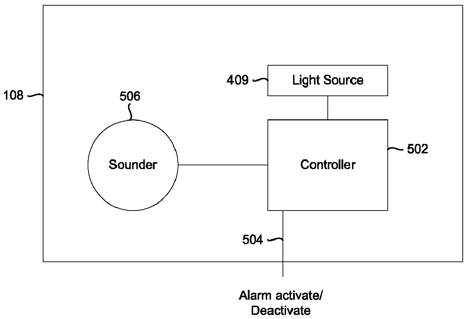

Figure 3 shows a perspective view 300 of the front cover 104 with the diffuser 110 in situ. The diffuser 110 has a shape that is complementary to the shape of the major internal face, that is, the rear or inwardly-directed face 112, of the front cover 104.

Figure 4 shows an exploded view 400 of the diffuser 110. The diffuser comprises a substantially planar portion 402 bearing a light receiving face 404 and a light radiating face 406, that is, a surface that faces the inner surface 112 of front cover 104. The substantially planar portion 402 is preferably made from Perspex, ABS, Acrylic or any other similarly transparent material. The light receiving face 404 is inclined relative to the light radiating face 406. According to one embodiment, the light receiving face 404 is orthogonal to the light radiating face 406.

The diffuser 110 comprises a scattering or diffusing surface 408. The scattering or diffusing surface 408 is arranged to scatter the light received, via the light receiving face 404, from a light source 409 though the light radiating surface 406 substantially uniformly. The scattering or diffusing surface 408 is realised by a plurality of light scattering formations formed in the scattering or diffusing surface 408. Preferably, the light scattering formations are grooves, etched or otherwise formed in the diffusing surface 408.

The diffuser 110 comprises a reflective layer 410 disposed over the diffusing surface 408. The reflective layer 410 is arranged to reflect light incident thereon back into the planar portion 402.

Preferably, the diffuser 110 comprises a trim 412, disposed round the edges of the planar portion 402, adapted to prevent light egress from the edges of the planar portion 402. Preferred embodiments use a reflective material to form the trim 412 that is arranged to reflect light incident thereon back into the planar portion 402.

Alternatively, embodiments can be realised in which the light receiving face 404 is inclined obtusely relative to the light emanating face 406. This embodiment has the advantage that light from the light source 409 is primarily directed onto the scattering formations of the diffuser.

Preferred embodiments use a plurality of LEDs as the light source 409.

The diffuser 110 comprises a wire housing 414. The wire housing 414 is arranged to house wires for coupling power to the light source 409 from the circuit board 108. The wire housing 414 is arranged to cooperate with the hinges 106 to aid maintaining the diffuser 110 in situ via a snug fit or snap fit.

The diffuser 110 produces a substantially uniform light that illuminates the inner surface 112 of the front cover 104. In turn, the front face of the front cover radiates a substantially uniform light.

Although the above bellbox has been described with reference to the front cover 104 having a separate diffuser installed or installable therein, embodiments of the present invention are not limited thereto. Embodiments can be realised in which the front cover 104 has an integrally formed diffuser having substantially all of the features described above, but being integrally formed, that is, moulded, as part of the front cover. Such a diffuser would have a mount for receiving the light source 409 and the light scattering formations would be formed on the inner face 112 of the cover and the light emanating face of the diffuser would be the outer face of the front cover. In such an embodiment, trim 412 as described above would be optional.

Figure 5 shows schematically a control system 500 for bellboxes according to embodiments of the present invention. The control system 500 is formed on the circuit board 108. The control system 500 comprises a controller 502. The controller 502 is responsive to at least one input signal 504 from a main control panel (not shown) to raised or cancel an alarm. The controller 502 upon receiving a signal to raise an alarm performs at least one and preferably both of causing a sounder 506 to produce an audible alarm signal and causing visual alarm signal. The visual alarm signal comprises sending a signal to the light source 409 to vary the light output. For example, the light source can be arranged to alternative between two states. The two states could be "on" and "off" states, that is, the light source 409 is switched on and off in an alternating manner that is visually perceivable by a person. Alternatively, the light source 409 can be arranged to produce two different states of illumination such as, for example, alternating between two different light intensities. Embodiments can be realised in which the light source 409 is able to produce two or more colours of light. For example, the light source 409 might comprise a number of LEDs for producing white light and a number of LEDs for producing red light and the above mentioned alternating states could be flashing that alternates between white light and red light.

Due to regulations within some jurisdictions, a sounder cannot be allowed to sound continuously following detecting an intruder until the main alarm panel is reset. Suitably, the controller 502 is arranged to disable to sounder, that is, cause it to stop producing an audible output after a predetermined period of time. The period of time might be, for example, 15 minutes. However, there is still a desire to produce an alarm or intruder detection signal that can be acted upon. Accordingly, embodiments of the present invention arrange for the controller 502, upon deactivating the sounder, to continue to cause the light source 409 to produce a visual indication of intrusion detection.

Embodiments can be realised that additionally arrange for the controller 502 to modulate the light source 409 in such a manner to indicate that the alarm system is at armed. Preferably, displaying or outputting an indication that the alarm system is armed is limited to a predetermined period of time. For example, for a period of 10 seconds following arming of the alarm system by a user.

## Claims

1. A bellbox comprising a housing having a front face; the bellbox further comprising a light diffuser adapted to diffuse light from a light source to thereby produce substantially uniform light emanating from the front face.

2. A bellbox as claimed in claim 1 further comprising at least one of said light source and a mount for receiving said diffuser.

3. A bellbox as claimed in claim 1 wherein said diffuser is integrally formed as part of the front cover.

4. A bellbox as claimed in any preceding claim wherein said diffuser bears a light receiving face and a light emitting face.

5. A bellbox as claimed in claim 4 wherein said light receiving face and said light emitting face are inclined relative to one another.

6. A bellbox as claimed in claim 4 wherein said light receiving face and said light emitting face are substantially orthogonal to one another.

7. A bell box as claimed in any preceding claim wherein said diffuser bears a plurality of formations adapted to scatter the light received from the light source.

8. A bellbox as claimed in claim 7 wherein said plurality of formations are formed on an inward facing surface of said front cover and adapted to scatter light incident thereon to produce said substantially uniform light emanating from the front face.

9. A bellbox as claimed in any preceding claim wherein said diffuser comprises a planar body bearing a plurality of light scattering formations adapted to scatter light incident thereon to produce said substantially uniform light emanating from the front face.

10. A bellbox as claimed in claim 9 wherein said plurality of light scattering formations comprise a plurality of hollows.

11. A bellbox as claimed in claim 9 wherein the plurality of light scattering formations comprise a plurality of elongate grooves.

12. A bellbox light diffuser comprising a light receiving face to receive light from a light source, a light scattering face to scatter light received via the light receiving face and a light radiating face to radiate light scattered by the light scattering face.

13. A bellbox light diffuser as claimed in claim 12 further comprising said light source disposed adjacent to the light receiving face.
